# EUROPEAN PATENT SPECIFICATION

(11) **EP 1 644 634 B1**
(45) Date of publication and mention of the grant of the patent: **02.11.2006**
(21) Application number: 03817940.4
(22) Date of filing: 15.07.2003
(51) Int. Cl.: F02M 61/16

(54) **METERING DEVICE FOR A PRESSURISED FLUID AND METHOD OF FORMING THE SAME**
DOSIERVORRICHTUNG FÜR EIN DRUCKFLUID SOWIE DEREN HERSTELLUNGSVERFAHREN
DISPOSITIF DE DOSAGE DE FLUIDE SOUS PRESSION ET SA METHODE DE REALISATION

(43) Date of publication of application: 12.04.2006
(73) Proprietor: SIEMENS AKTIENGESELLSCHAFT, 80333 München (DE)
(72) Inventor: HAMANN, Christoph, 93107 Thalmassing (DE); PULEJO, Marco, I-56010 Pisa (IT)
(74) Representative: Payne, Janice Julia
(86) International application number: PCT/EP2003/008640
(87) International publication number: WO 2005/015004

(56) References cited:
- DE-A- 10 007 733
- DE-A- 10 155 413
- US-A- 3 297 261
- US-B1- 6 311 950

## Description

This invention relates to a metering device for a pressurised fluid and a method of forming the same, in particular for high pressure fuel injector valves.

US-B-6311950 describes a fluid metering device in which a sealing element is provided in the form of metal bellows. The sealing element is provided between a valve needle, moving axially through a chamber for delivering a metered dose of a pressurised fluid from the chamber, and a housing. In this document, weld joints are proposed to join the metal bellows to the valve needle and the housing. However, a problem of welding the bellows to the valve needle is that the valve needle is hardened and tends to crack in the fusion zone when the welding is carried out, affecting the long term stability of the device.

DE 100 07 733 A describes an injection valve with an injection jet produced by axially shiftable jet needle operating an actuator which results in a reliable reproducible fuel injection process at high pressure and a reliable, long-lasting, efficient operation of the valve.

In accordance with a first aspect of the present invention, a metering device for a pressurised fluid comprises a housing, a valve needle and a bushing element, wherein the bushing element comprises a metal bellows and a carrier ring; and the carrier ring is crimped to the valve needle.

The benefit of crimping is that it is not done at elevated temperatures, so it does not cause the needle to crack, as occurs with welding, for example laser welding as proposed by the prior art, but it does have the necessary mechanical strength and sealing effect to maintain a bond between the bushing and the needle even when exposed to vibration.

Preferably, the metering device further comprises an adhesive sealant layer.

This additional layer provides additional sealing of the joint and is able to withstand the typical temperatures of operation of the valve. Although, adhesive alone would not have the necessary mechanical strength, the combination of a crimp bond and adhesive sealant allows the beneficial features of a hermetic sealing element without causing damage to the needle when bonding the sealing element to the needle, as occurs in the prior art device. The resulting device has long term stability and the joint is resistant to vibration and elevated temperature.

Preferably, the adhesives are able to withstand temperatures up to 250°C.

Preferably, the adhesives comprise silicone, polyimide or ceramic based adhesives.

In accordance with a second aspect of the present invention, a method of forming a metering device for a pressurised fluid comprises providing a housing, a valve needle and a bushing element, the bushing elements comprising a metal bellows and a carrier ring; and crimping the carrier ring to the valve needle.

Preferably, the method further comprises applying an adhesive sealant to the crimped bushing element.

Preferably, the method further comprises welding the housing to the metal bellows.

An example of a metering device and a method of forming such a device in accordance with the present invention will now be described with reference to the accompanying drawing in which:

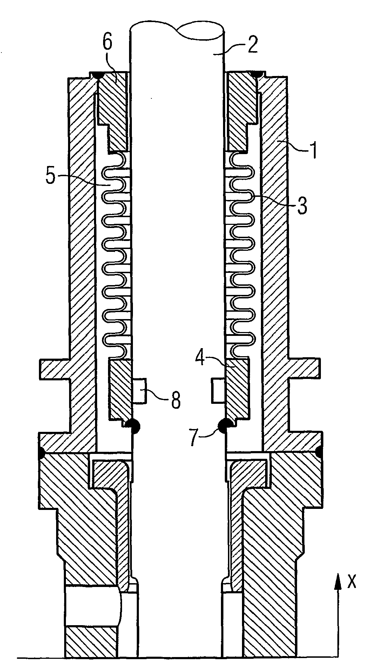

Figure 1 illustrates an example of an armature assembly of a metering device according to the present invention.

For high pressure direct injection (HPDT) injectors a bellows has to be fixed to a needle. Conventionally, this is done by welding the bellows to a ring and subsequently welding the ring to the needle. As the needle is made out of hardened material, cracking of the needle occurs when it is welded.

Fig. 1 shows an example of an HPDI armature assembly for a metering device according to the present invention. The armature assembly comprises a housing 1 surrounding a valve needle 2. A bushing element, comprising a set of metal bellows 3 having a carrier ring 4 at one end, is provided between the needle 2 and the housing 1 to guide the valve needle as it moves through a chamber 5 filled with pressurised fluid, without allowing the fluid pressure to influence the movement of the needle. The carrier ring 4 is joined to the needle and the opposite end 6 of the bellows is joined to the housing 1. This join may be an adhesive join or a weld.

It is necessary to provide a hermetic seal between the needle and the bellows to prevent fluid leakage. As discussed above, the conventional technique for joining the carrier ring and the needle is to weld the ring to the needle, but typically, the material of the needle is hardened and so it tends to crack in the fusion zone when subjected to the elevated temperatures required for welding. Another, problem with joints in such a device is that the joint is exposed to vibration and elevated temperature (up to 250 C) during operation. At this elevated temperature most adhesives lose their mechanical strength, so it would not be suitable to use an adhesive bond to overcome the problems of fracturing caused by welding.

The needle 2 is provided with a groove 8 into which a crimp notch, formed when the carrier ring 4 is crimped, engages. The present invention solves the problems described by crimping the carrier ring 4 to the needle 2, thereby preventing cracking of the fusion zone and overcoming the lack of long term stability. Crimping the ring 4 to the needle 2, provides mechanical integrity. In addition, a layer of adhesive 7 may be applied to the join between the carrier ring and the needle to further improve the sealing effect of the join. Several classes of adhesives can withstand the required temperatures of operation without becoming brittle, which is a prerequisite for vibration resistance, for example silicones such as those used for moulding a piezo stack or polyimides, generally used for high temperature insulation of wires. Polyimides, in particular, have a very low tendency to outgas. Furthermore, the solid crimping joint is appropriate for ceramic adhesives, which are prone to be brittle, so this type of adhesive can be used, which would not otherwise be possible.

In the example given above, the bushing element is provided by a metal bellows. The present invention circumvents the thermal load problems suffered by the needle due to welding and also fulfils the requirements of fixing the bellows to the needle hermetically.

## Claims

1. A metering device for a pressurised fluid, the device comprising a housing, a valve needle and a bushing element; wherein the bushing element comprises a metal bellows (3) and a carrier ring (4); and the carrier ring (4) is crimped to the valve needle (2).

2. A metering device according to claim 1, further comprising an adhesive sealant layer.

3. A metering device according to claim 2, wherein the adhesives are able to withstand temperatures up to 250°C.

4. A metering device according to claim 2 or claim 3, wherein the adhesives comprise silicone or polyimide based adhesives.

5. A method of forming a metering device for a pressurised fluid, the method comprising providing a housing (1), a valve needle (2) and a bushing element, the bushing element comprising a metal bellows (3) and a carrier ring (4); and crimping the carrier ring (4) to the valve needle (2).

6. A method according to claim 5, further comprising applying an adhesive sealant to the crimped bushing element.

7. A method according to claim 6, wherein the adhesives are able to withstand temperatures up to 250°C.

8. A method according to claim 5 or claim 6, further comprising welding the housing (1) to the metal bellows (3).

## Patentansprüche

1. Dosiervorrichtung für ein unter Druck stehendes Fluid, wobei die Vorrichtung ein Gehäuse, eine Ventilnadel und ein Durchführungselement umfasst; wobei das Durchführungselement einen Metallbalg (3) und einen Trägerring (4) umfasst; und wobei der Trägerring (4) auf die Ventilnadel (2) aufgequetscht ist.

2. Dosiervorrichtung nach Anspruch 1, die ferner eine Kleberdichtmasseschicht umfasst.

3. Dosiervorrichtung nach Anspruch 2, wobei die Kleber in der Lage sind, Temperaturen von bis zu 250°C standzuhalten.

4. Dosiervorrichtung nach Anspruch 2 oder Anspruch 3, wobei die Kleber Klebstoffe auf Silikon- oder Polyimidbasis beinhalten.

5. Verfahren zur Herstellung einer Dosiervorrichtung für ein unter Druck stehendes Fluid, wobei das Verfahren das Bereitstellen eines Gehäuses (1), einer Ventilnadel (2) und eines Durchführungselements umfasst, wobei das Durchführungselement einen Metallbalg (3) und einen Trägerring (4) umfasst; und Quetschen des Trägerrings (4) auf die Ventilnadel (2).

6. Verfahren nach Anspruch 5, das ferner das Aufbringen einer Kleberdichtmasse auf das aufgequetschte Durchführungselement umfasst.

7. Verfahren nach Anspruch 6, wobei die Kleber in der Lage sind, Temperaturen von bis zu 250°C standzuhalten.

8. Verfahren nach Anspruch 5 oder Anspruch 6, das ferner das Schweißen des Gehäuses (1) an den Metallbalg (3) umfasst.

## Revendications

1. Dispositif de dosage pour fluide sous pression, le dispositif comprenant un logement, une aiguille de soupape et un élément de garniture, en sachant que l'élément de garniture comprend un soufflet métallique (3) et une bague de support (4), et que la bague de support (4) est sertie à l'aiguille de soupape (2).

2. Dispositif de dosage selon la revendication 1, comprenant par ailleurs une couche de mastic adhésif.

3. Dispositif de dosage selon la revendication 2, dans lequel les adhésifs sont capables de résister à des températures allant jusqu'à 250 °C.

4. Dispositif de dosage selon la revendication 2 ou la revendication 3, dans lequel les adhésifs sont constitués par des adhésifs à base de silicone ou de polyimide.

5. Procédé de réalisation d'un dispositif de dosage pour fluide sous pression, le procédé consistant à réaliser un logement (1), une aiguille de soupape (2) et un élément de garniture, l'élément de garniture comprenant un soufflet métallique (3) et une bague de support (4), et à sertir la bague de support (4) à l'aiguille de soupape (2).

6. Procédé selon la revendication 5, consistant par ailleurs à appliquer un mastic adhésif sur l'élément de garniture serti.

7. Procédé selon la revendication 6, dans lequel les adhésifs sont capables de résister à des températures allant jusqu'à 250 °C.

8. Procédé selon la revendication 5 ou la revendication 6, consistant par ailleurs à souder le logement (1) au soufflet métallique (3).
